# DEMANDE DE BREVET EUROPEEN

(11) **EP 3 846 029 A1**
(43) Date de publication de la demande: **07.07.2021**
(21) Numéro de dépôt: 20212471.5
(22) Date de dépôt: 08.12.2020
(51) Int. Cl.: G06F 9/48, G06F 21/74

(54) **PROCESSEUR À DISTRIBUTION CONFIGURABLE DES RESSOURCES PRIVILÉGIÉES ET EXCEPTIONS AUX ANNEAUX DE PROTECTION**

(30) Priorité: 31.12.2019 FR 1915755
(71) Demandeur: Kalray, 38330 Montbonnot Saint Martin (FR)
(72) Inventeur: GUIRONNET DE MASSAS, Pierre, 06110 LE CANNET (FR); RAY, Vincent, 38580 ALLEVARD (FR); DUPONT DE DINECHIN, Benoît, 38000 Grenoble (FR)
(74) Mandataire: de Jong, Jean Jacques

(57) **Abrégé**

L'invention est relative à un processeur ayant plusieurs anneaux de protection (PL) et comprenant un système de gestion d'anneaux de protection (BCU) dans lequel les attributions d'exceptions ou de ressources privilégiées à des anneaux de protection sont définies par une table programmable (REO).

## Description

### Domaine

L'invention est relative aux anneaux de protection ou niveaux de privilège d'un processeur, permettant à différentes couches de logiciel d'interagir de manière sûre.

### Arrière-plan

Les processeurs actuels sont architecturés pour offrir plusieurs niveaux de privilège d'exécution, qu'on appelle aussi anneaux de protection. On utilisera ci-après les deux termes indifféremment.

Dans l'état de l'art, les ressources d'exécution et les registres de configuration du matériel sont affectés à des anneaux de protection selon des privilèges présumés. Un code applicatif s'exécute dans l'anneau de moindre privilège et ne peut accéder à des fonctions telles que la configuration de l'unité de gestion mémoire (MMU), les interfaces d'entrée/sortie, les horloges, etc. Le code superviseur, tel qu'un système d'exploitation, s'exécute dans un anneau de privilège plus élevé, mais ne peut accéder à des fonctions communes à plusieurs systèmes d'exploitation virtualisés, comme la configuration des contrôleurs d'interruption. Le code hyperviseur, tel qu'un moniteur de machines virtuelles, s'exécute dans un anneau de privilège encore plus élevé, mais ne peut accéder à des paramètres de configuration de démarrage du matériel ou d'un débogueur bas-niveau.

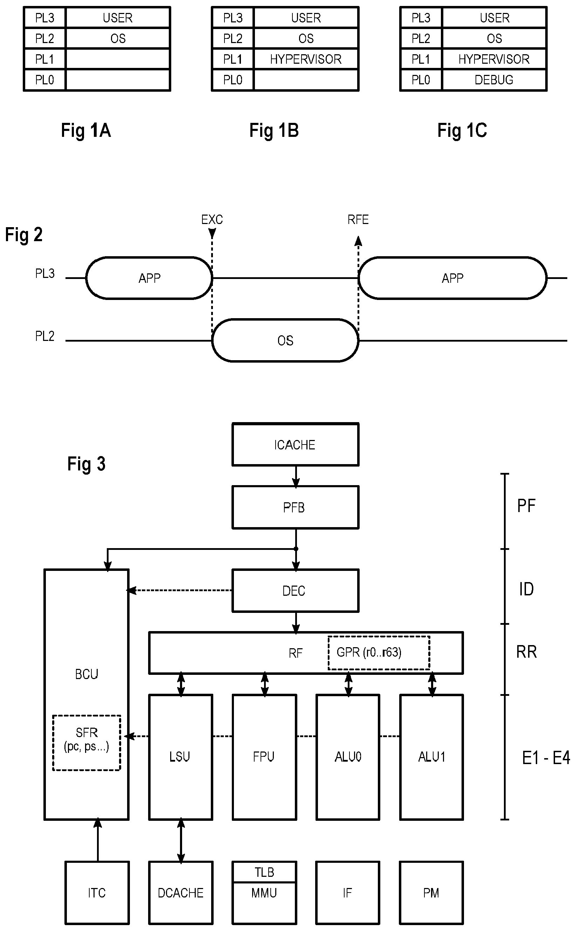

Les figures 1A à 1C illustrent des exemples d'affectation d'anneaux de protection pour différentes piles logicielles à mettre en œuvre sur un même processeur possédant quatre niveaux de privilège PL0 à PL3, le niveau de privilège PL0 étant le plus élevé. Les niveaux de privilège PL0 à PL3 sont aussi appelés anneaux 0 à 3. Une telle organisation est utilisée, par exemple, dans les processeurs d'architecture x86.

La figure 1A correspond au cas courant d'applications tournant sur un système d'exploitation. Les applications (USER) tournent dans l'anneau 3, le moins privilégié, tandis que le système d'exploitation (OS) peut être affecté à l'anneau 2 immédiatement inférieur. Ici, où les anneaux restants ne sont pas utilisés, le système d'exploitation pourrait aussi être affecté à l'un des anneaux 1 et 0. En fait, sur un processeur x86, les quatre anneaux n'ont jamais été tous utilisés historiquement - le code applicatif tourne dans l'anneau 3 tandis que le système d'exploitation (Linux, Windows, macOS) tourne dans l'anneau 0. Faire tourner une couche logicielle dans un anneau différent implique généralement une recompilation du code.

La figure 1B illustre le contexte d'un système virtualisé. Dans ce cas, un système hyperviseur (hôte) tourne sous les systèmes d'exploitation (invités), par exemple dans l'anneau 1. Dans un processeur x86, où l'anneau 0 est historiquement attribué au système d'exploitation, on a dû créer un anneau « -1 » pour faire tourner l'hyperviseur, comme cela est exposé, par exemple, dans https://en.wikipedia.org/wiki/Protection_ring.

La figure 1C illustre un contexte d'utilisation d'un débogueur bas-niveau dans un système virtualisé. Le débogueur tourne sous l'hyperviseur dans l'anneau 0.

La figure 2 est un chronogramme illustrant une transition entre anneaux, par exemple entre un programme applicatif APP tournant dans l'anneau 3 et le système d'exploitation OS tournant dans l'anneau 2. Une transition vers un anneau inférieur (de privilège plus élevé) est initiée généralement au déclenchement d'une exception EXC. Le terme « exception » englobe notamment les interruptions, les fautes matérielles (« hardware traps »), et les appels système. Les interruptions et les fautes sont généralement déclenchées par le matériel, tandis que les appels système sont des instructions exécutées par le programme en cours lui-même.

Au déclenchement de l'exception EXC, le programme APP en cours d'exécution est dérouté vers une routine de traitement prévue par le système d'exploitation, tournant dans l'anneau 2. Lorsque la routine a terminé, elle retourne la main au programme initial en exécutant une instruction désignée par RFE (« Return From Exception »).

Le traitement des exceptions repose notamment sur un registre d'état de processeur PS, qui contient plusieurs champs de bits de contrôle, définissant notamment l'anneau d'exécution actuel, et les exceptions à masquer. Au déclenchement d'une exception, le processeur, en une opération matérielle et atomique, sauvegarde les contenus du compteur de programme PC et du registre PS dans des emplacements appelés SPC (« Saved Program Counter ») et SPS (« Saved Processor State »), et masque les interruptions ultérieures par le réglage de champs correspondants du registre PS. La routine de traitement de l'exception prend la main et commence souvent par la sauvegarde d'informations complémentaires du contexte d'exécution, opération qui ne devrait être interrompue sous peine de perdre le contexte.

La routine se termine par l'exécution de l'instruction RFE. En réponse à l'instruction RFE, le processeur restitue de façon matérielle et atomique les valeurs d'origine aux registres PC et PS à partir des sauvegardes aux emplacements SPC et SPS, à la suite de quoi le programme APP reprend au point qu'il avait atteint au déclenchement de l'exception.

Chaque exception est généralement attribuée par construction à un anneau déterminé de rang inférieur (de privilège supérieur) à celui où l'exception peut se produire, souvent l'anneau de rang immédiatement inférieur par souci de simplification. Il en résulte une architecture rigide qui entraîne des compromis et une diminution des performances dans certaines circonstances.

### Résumé

On prévoit de façon générale un processeur ayant plusieurs anneaux de protection et comprenant un système de gestion d'anneaux de protection dans lequel les attributions d'exceptions ou de ressources privilégiées à des anneaux de protection sont définies par une table programmable.

La table peut être programmée par du logiciel exécuté au démarrage du processeur.

Le système de gestion d'anneaux de protection peut être configuré pour répondre à une exception en déroutant le traitement de l'exception vers l'anneau programmé pour l'exception.

Le système de gestion d'anneaux de protection peut être configuré pour déclencher une faute de privilège lors de l'accès à une ressource privilégiée à partir d'un anneau de protection moins privilégié que l'anneau programmé pour la ressource privilégiée ; et répondre à la faute de privilège en déroutant le traitement de l'exception vers l'anneau programmé pour la ressource privilégiée.

Le processeur peut comprendre des unités matérielles susceptibles de déclencher des exceptions à la survenue d'événements ayant lieu au cours de l'exécution d'un programme par le processeur ; un registre d'état de processeur identifiant l'anneau de protection courant appliqué au programme en cours d'exécution ; un registre d'attribution programmable matérialisant la table programmable ; pour chaque anneau de protection, un registre respectif de sauvegarde d'état de processeur, définissant l'anneau de protection et les droits correspondants ; et un circuit de traitement des exceptions, configuré pour, au déclenchement d'une exception indexer le registre d'attribution avec un identifiant généré avec l'exception, pour désigner l'anneau de protection correspondant ; échanger le contenu du registre d'état de processeur avec le contenu du registre de sauvegarde d'état désigné par le registre d'attribution ; et dérouter le programme en cours vers une routine de traitement de l'exception, d'où il résulte que la routine de traitement s'exécute dans l'anneau de protection défini par le nouveau contenu du registre d'état de processeur.

Le processeur peut comprendre en outre un compteur de programme identifiant l'adresse d'une instruction en cours d'exécution sur le processeur ; pour chaque anneau de protection, un registre respectif de sauvegarde du compteur de programme ; pour chaque anneau de protection, un vecteur d'exception respectif identifiant les adresses des routines de traitement des exceptions de l'anneau de protection correspondant. Le circuit de traitement des exceptions peut en outre être configuré pour, au déclenchement d'une exception, enregistrer le contenu du compteur de programme dans le registre de sauvegarde de compteur de programme désigné par le registre d'attribution ; et écrire dans le compteur de programme l'adresse fournie par le vecteur d'exception désigné par le registre d'attribution.

Le processeur peut comprendre une instruction d'écriture de registre système, mise en œuvre par le processeur pour écrire dans un registre d'attribution identifié par l'instruction la somme du rang de l'anneau courant et d'un paramètre de l'instruction véhiculant un rang relatif.

Les exceptions peuvent inclure une interruption dite horizontale, le registre d'attribution étant programmé pour affecter l'interruption horizontale au même anneau de protection que celui du programme en cours d'exécution au moment du déclenchement de l'interruption.

On prévoit également un procédé de gestion d'anneaux de protection dans un processeur, comprenant des étapes consistant à programmer une table d'attribution d'exceptions ou de ressources privilégiées à des anneaux de protection ; au déclenchement par le processeur d'un événement signalant une exception quelconque ou un accès à une ressource privilégiée dans un anneau moins privilégié que celui programmé pour la ressource privilégiée, traiter l'événement par une routine s'exécutant dans un anneau de protection affecté à l'exception ou à la ressource privilégiée ; et trouver dans la table l'anneau de protection affecté à l'exception ou à la ressource privilégiée.

La programmation de la table d'attribution peut être effectuée par du logiciel exécuté au démarrage du processeur.

Le procédé peut comprendre des étapes consistant à exécuter un programme en cours dans un anneau de protection et selon des droits définis dans un registre d'état de processeur ; pour chaque anneau de protection, définir, dans un registre respectif de sauvegarde d'état de processeur, l'anneau de protection et des droits correspondants ; et au déclenchement de l'événement, échanger le contenu du registre d'état de processeur avec le contenu du registre de sauvegarde d'état identifié par la table d'attribution.

Le procédé peut comprendre des étapes consistant à exécuter un hyperviseur hôte dans un premier anneau ; exécuter un système d'exploitation invité dans un deuxième anneau moins privilégié que le premier anneau, conçu à l'origine pour gérer une table de traduction d'adresses virtuelles en adresses physiques ; exécuter un programme utilisateur dans un troisième anneau moins privilégié que le deuxième anneau, conçu pour utiliser des adresses virtuelles appliquées à la table de traduction ; attribuer au deuxième anneau une exception de défaut d'allocation d'adresse virtuelle, déclenchée lorsque la table de traduction ne contient pas d'entrée pour une adresse virtuelle appliquée par le programme utilisateur ; attribuer la table de traduction en tant que ressource privilégiée au premier anneau, d'où il résulte qu'une tentative d'accès en écriture à la table par un anneau moins privilégié déclenche une faute de privilège ; et configurer la routine de traitement de la faute de privilège, exécutée dans le premier anneau par l'hyperviseur, pour mettre à jour la table de traduction.

### Description sommaire des dessins

Des modes de réalisation seront exposés dans la description suivante, faite à titre non limitatif en relation avec les figures jointes parmi lesquelles :
- [Fig. 1] Les figures 1A à 1C, précédemment décrites, illustrent différentes organisations de programmes dans un groupe d'anneaux de protection ;
- [Fig. 2] La figure 2, précédemment décrite, est un chronogramme illustrant un traitement générique d'une exception ;
- [Fig. 3] La figure 3 illustre une architecture d'un exemple de processeur servant de base à l'invention ;
- [Fig. 4] La figure 4 illustre un exemple de jeu de registres système permettant de mettre en œuvre l'invention ;
- [Fig. 5] Les figures 5A et 5B illustrent un mode d'utilisation des registres de la figure 4 lors du déclenchement d'une exception et lors du retour de l'exception, respectivement ;
- [Fig. 6] Les figures 6A et 6B illustrent un traitement d'une interruption dite « horizontale », respectivement dans un processeur classique et dans un processeur à attribution programmable des anneaux ; et
- [Fig. 7] La figure 7 illustre un exemple de traitement d'une faute d'accès mémoire dans un système virtualisé.

### Description détaillée

Comme on l'a précédemment indiqué, dans des architectures classiques de processeurs à anneaux de protection, chaque exception est attribuée par construction à un anneau déterminé. Cela impose généralement une organisation rigide des couches de logiciel dans les différents anneaux. Par exemple, si on souhaite offrir une organisation ultime du type de la figure 1C, où chaque anneau contient une couche logicielle spécifique, on s'aperçoit que, quand on n'a pas besoin de toutes les couches, comme à la figure 1A, les couches utilisées restent néanmoins dans les anneaux qui leur sont attribués, en laissant des vides. En effet, le décalage de ces couches logicielles vers d'autres anneaux introduit une modification de la plateforme matérielle du point de vue des programmes et nécessite généralement une recompilation de ces programmes. En reprenant l'exemple de l'architecture x86, le code applicatif et le système d'exploitation sont « bloqués » historiquement dans les anneaux 3 et 0, respectivement, rendant difficile l'insertion d'un code hyperviseur dans un anneau plus privilégié, qui n'a pas été prévu.

Dans la suite de la description, on regroupe sous le terme « exception » les événements susceptibles de provoquer le déroutement du processeur, tels que : interruptions, fautes matérielles, appels système. Sous le terme « ressource » on regroupe des éléments matériels manipulables par un programme : instructions spécifiques, registres spécifiques, champs d'un registre, composants matériels intégrés au cœur (tels qu'une horloge), ou des combinaisons de ceux-ci.

On propose ci-après une structure de processeur permettant d'exécuter une couche logicielle dans un anneau arbitraire sans nécessiter de recompilation du code. A cet effet, on rend programmable l'attribution des exceptions et de certaines ressources, dites privilégiées, aux anneaux. Par exemple, lors d'une phase d'initialisation du processeur précédant l'exécution des différentes couches logicielles prévues, chaque exception ou ressource privilégiée est attribuée à l'un des anneaux disponibles, par exemple d'après le contenu d'une table préprogrammée, en pratique un ou plusieurs registres dédiés du processeur.

La figure 3 illustre une architecture d'un exemple de cœur de processeur servant de base à une attribution programmable des exceptions aux anneaux, comme un cœur du processeur Coolidge de Kalray. Le cœur dispose d'un pipeline ayant une profondeur de 7 étages, comprenant un étage de préchargement d'instructions PF (« Pre-Fetch »), un étage de décodage d'instruction ID, un étage de lecture de registres RR, et quatre étages d'exécution d'instruction E1 à E4.

L'étage PF comprend essentiellement une mémoire tampon PFB stockant les instructions préchargées, alimentée à partir d'un cache d'instructions ICACHE. L'étage ID comprend une unité de décodage d'instructions DEC qui commande un banc de registres RF (« Register File ») formant l'étage RR. Le banc de registres RF gère des registres d'usage générique GPR (« General Purpose Registers »), dans cet exemple 64 registres r0 à r63 de 64 bits. Les registres sélectionnés sont reliés en lecture ou écriture, selon l'instruction décodée, à l'une de plusieurs unités de traitement parallèles formant les étages d'exécution E1 à E4. Ces unités de traitement peuvent inclure une unité de lecture/écriture mémoire LSU (« Load/Store Unit ») accédant à un cache de données DCACHE, une unité de traitement à virgule flottante FPU (« Floating-Point Unit »), et plusieurs unités arithmétiques et logiques ALU (ici deux).

En fait, le cœur étant d'architecture VLIW (« Very Large Instruction Word »), l'unité de décodage DEC traite des paquets pouvant contenir plusieurs instructions à exécuter simultanément - le cœur peut ici exécuter jusqu'à cinq instructions simultanément, une sur chaque unité de traitement des étages d'exécution, et une dans une unité BCU décrite ci-dessous.

Ainsi, le cœur comprend également une unité de branchement et de comparaison BCU connectée pour traiter les instructions qui lui sont dédiées dès l'entrée du décodeur DEC. Cette unité BCU, qui est conçue pour prendre en charge la gestion des exceptions, inclut un jeu de registres de fonctions système SFR, incluant notamment un compteur de programme PC, configuré pour contenir l'adresse de l'instruction en cours d'exécution (ou l'adresse de la première instruction d'un paquet VLIW), et un registre d'état de processeur PS, qui définit notamment l'anneau dans lequel s'exécute l'instruction courante, les permissions associées, et les exceptions masquées. Des emplacements SPC et SPS sont également prévus pour la sauvegarde du compteur de programme et du registre d'état de processeur.

L'unité BCU est reliée à diverses autres unités pour générer des exceptions de type faute matérielle ou appel système. En particulier le décodeur d'instructions DEC capture les appels système, qui sont des instructions spécifiques, tandis que diverses unités ou ressources peuvent renvoyer des fautes matérielles, que l'on peut qualifier génériquement « d'opérations non-autorisées » (accès à une adresse inexistante ou protégée, accès à une ressource protégée, dépassement de capacité, etc.).

Le cœur comprend finalement diverses unités périphériques, notamment un contrôleur d'interruptions ITC qui génère des interruptions vers l'unité BCU en fonction d'événements externes, une unité de gestion de mémoire MMU associée à une table de traductions d'adresses TLB, des interfaces d'entrée/sortie IF, des moniteurs de performance PM, les mémoires cache, etc. susceptibles d'aussi générer des exceptions.

L'architecture de la figure 3 décrite jusqu'à présent et son fonctionnement sont connus et ne seront pas décrits plus en détail ci-après, hormis les éléments utiles à la compréhension de l'invention.

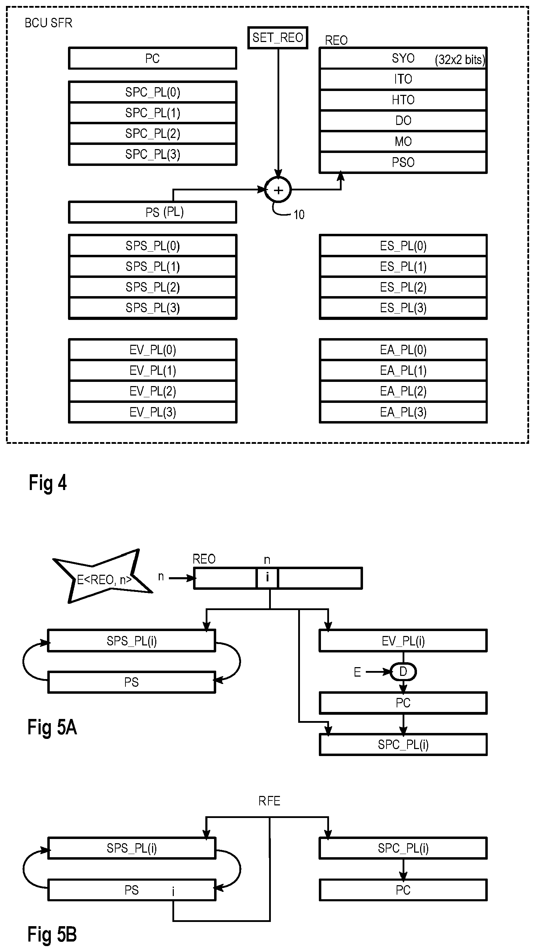

La figure 4 illustre un exemple de jeu de registres système permettant de mettre en œuvre une attribution programmable des exceptions aux anneaux. Ces registres peuvent inclure et compléter les registres de fonctions système SFR de l'unité BCU, et être accessibles par l'intermédiaire d'instructions dédiées à l'unité BCU pour manipuler ces registres.

Comme cela a été évoqué, le jeu de registres SFR comprend le compteur de programme PC, le registre d'état de processeur PS, et des emplacements de sauvegarde du compteur de programme SPC et de sauvegarde du registre d'état de processeur SPS. En réalité, les emplacements SPC et SPS comprennent chacun plusieurs registres SPC_PL(i) et SPS _PL(i) dédiés respectivement aux différents anneaux de protection PL(i).

Le jeu de registres SFR comprend par ailleurs des vecteurs d'exception EV, des registres de syndrome d'exception ES, et des registres d'adresse d'exception EA, un par anneau PL(i) pour chaque type. Les vecteurs d'exception EV définissent, pour chaque anneau, les adresses des routines de traitement des exceptions pour les différents types d'exception pouvant survenir dans l'anneau correspondant. Chaque syndrome d'exception ES contient des données stockées au moment du déclenchement d'une exception dans l'anneau correspondant, permettant à la routine de traitement d'exception d'identifier la nature de l'exception et adapter le traitement. Similairement, chaque registre d'adresse d'exception EA contient une adresse mémoire à l'origine de l'exception survenue dans l'anneau correspondant, permettant à la routine de traitement de gérer des fautes liées aux accès mémoire. Les fonctions des registres EV, ES et EA sont connues et ne seront pas décrites plus en détail.

Le jeu de registres SFR est complété par un groupe de registres, dont chacun sera désigné génériquement par REO (« Resource and Exception Ownership »), configurés ensemble pour attribuer chaque exception ou ressource privilégiée du système à un anneau de protection donné. Les registres d'attribution REO sont programmables par un développeur système selon les besoins particuliers de sa pile logicielle. En pratique, le contenu des registres REO, comme celui des autres registres SFR, peut être défini dans un micrologiciel du processeur, exécuté à chaque démarrage du processeur. A des fins d'économie de matériel, les ressources et exceptions susceptibles d'être configurables peuvent être regroupées par lots au sein des registres REO, la différenciation étant alors effectuée par la routine de traitement d'exception.

Par ailleurs, les registres SFR peuvent être manipulés à tout moment par des instructions spécifiques dédiées à l'unité BCU, y compris les registres REO. Ainsi, rien n'empêche que les registres REO puissent être programmés une fois le système démarré. Par exemple, le micrologiciel peut être prévu pour charger un système d'exploitation dans un anneau donné, et laisser au système d'exploitation la programmation des attributions des exceptions et ressources, en sachant que le système d'exploitation ne pourra pas attribuer d'exceptions ou des ressources à un anneau plus privilégié que le sien, ni s'attribuer des ressources ou exceptions attribués à un niveau plus privilégié que le sien.

Le groupe de registres REO peut inclure :
un registre SYO d'attribution d'appels système génériques ;
un registre ITO d'attribution d'interruptions ;
un registre HTO d'attribution de fautes matérielles ;
un registre DO pour attribuer des ressources et exceptions servant au débogage (points d'arrêt, surveillance de variables, etc.) ;
un registre MO (« Miscellaneous Ownership ») pour attribuer des ressources matérielles spécifiques (chien de garde, moniteur de performance, unité MMU, registres SFR, etc.) ; et
un registre PSO pour attribuer des bits présents dans le registre d'état de processeur PS, ou dans un registre de sauvegarde correspondant SPS.

Ces six registres servent ainsi à attribuer des exceptions et des ressources privilégiées aux anneaux de manière programmable.

On peut ainsi prévoir de programmer les attributions de ressources matérielles privilégiées aux anneaux, de sorte que tout accès à une telle ressource n'est autorisé qu'à l'anneau spécifié ou un anneau plus privilégié. Les ressources matérielles privilégiées peuvent comprendre des unités d'exécution spécifiques, de sorte que l'exécution d'une instruction correspondante est aussi considérée comme un accès à une ressource matérielle.

L'unité BCU est alors configurée pour, en cas d'utilisation d'une telle ressource privilégiée dans un anneau non-autorisé, déclencher une faute de « privilège ». De telles fautes de privilège, bien que faisant partie des fautes traditionnelles de la spécification du processeur, ne sont pas attribuables à un anneau ou niveau de privilège unique. Par conséquent, on ne leur affecte pas un champ de registre REO qui dicterait de façon globale leur attribution. La gestion d'une telle faute matérielle incombera à l'anneau renseigné pour la ressource privilégiée dans le champ correspondant de registre REO.

Dans le processeur considéré à titre d'exemple, chaque registre REO, ayant par construction 64 bits, peut comprendre jusqu'à 32 champs de 2 bits, où les positions des champs dans le registre correspondent à des identifiants d'exception ou de ressource définis par les spécifications du processeur, et les deux bits de chaque champ identifient un anneau. On attribue ainsi un anneau parmi quatre à chacune de 32 exceptions ou ressources privilégiées possibles. La correspondance n'est pas obligatoirement d'un pour un - elle peut porter sur un ensemble cohérent de ressources ou exceptions. Les six registres REO configurés ainsi permettent de couvrir largement toutes les exceptions et ressources souhaitées dans un processeur générique.

Les figures 5A et 5B illustrent un mode d'utilisation des registres de la figure 4 lors du déclenchement d'une exception et du retour d'une exception. Les opérations décrites dans chacune de ces figures sont réalisées de façon matérielle.

A la figure 5A, une exception E est déclenchée, où E désigne un type d'exception parmi une interruption IT, un appel système SY, une faute matérielle HT, ou une exception liée au débogage D. Le matériel peut être conçu pour produire une information indicative du traitement de l'exception, ici un tuple <REO, n>, où REO identifie l'un des six registres parmi : HTO, SYO, ITO, DO, PSO, MO ; et « n » est l'index dans le registre.

Pour une exception E de type faute de privilège, déclenchée par un accès non autorisé à une ressource, le matériel peut être conçu pour générer un tuple <MO|PSO, n> identifiant la ressource ciblée par l'accès (par exemple une instruction non autorisée définie dans le registre MO, un champ non autorisé défini dans le registre PSO).

Pour une exception E de type interruption, le matériel peut être conçu pour générer un tuple <ITO, s> où « s » correspond au numéro de l'interruption.

Pour une exception E de type appel système, le matériel peut être conçu pour générer un tuple <SYO, div(m, 1024)>, où « m » est le numéro de l'appel, ce qui permet d'associer des tranches de 1024 numéros à chaque champ du registre SYO.

Pour une exception E de type faute matérielle, par exemple « défaut de page », le matériel peut générer un tuple <HTO, 12>.A la figure 5A, le tuple <REO, n> de l'exception identifie le registre REO à utiliser et lui applique l'index n. Cela interroge le champ de position n dans le registre, qui fournit une valeur i identifiant l'anneau de protection attribué à l'exception. Ce rang i fourni par le registre REO sélectionne le registre de sauvegarde d'état de processeur SPS_PL(i), le registre de sauvegarde de compteur de programme SPC_PL(i) et le vecteur d'exception EV_PL(i) attribués au rang i.

En même temps, les contenus des registres PS et SPS_PL(i) sont échangés, la valeur du compteur de programme PC est écrite dans le registre SPC_PL(i), et l'adresse fournie par le vecteur d'exception EV_PL(i) est écrite dans le compteur de programme PC.

Les registres de syndrome et d'adresse d'exception ES, EA sont mis à jour avec des valeurs caractérisant l'exception.

A un cycle d'horloge ultérieur, le processeur exécute l'instruction identifiée par la nouvelle valeur du compteur de programme PC, qui est la première instruction de la routine de traitement de l'exception. Cette routine s'exécute dans l'anneau défini par la nouvelle valeur du registre d'état de processeur PS, en prenant en compte les autres paramètres définis dans ce registre (permissions, interruptions masquées, etc.).

En pratique, le vecteur d'exception EV_PL(i) contient une seule adresse qui peut ne pas convenir à tous les types d'exception en termes d'efficacité, puisque les différents types d'exception demandent des traitements différents. Ainsi, comme cela est représenté, l'adresse en sortie du registre EV peut être soumis à un décalage D qui dépend du type E de l'exception, de sorte que l'exécution soit redirigée vers une routine adaptée.

En pratique, le contenu du registre SPS_PL(i) n'est pas écrit intégralement dans le registre PS. En effet, le registre SPS_PL(i) contient les valeurs de la fin de la dernière exécution de la routine de l'anneau i, qui peuvent avoir été modifiées par rapport aux valeurs initiales souhaitées. Ainsi, le système peut forcer l'écriture de certaines valeurs initiales dans le registre PS, notamment des masques d'interruptions et le rang de l'anneau, tel que fourni par le registre REO.

La relation de E vers <REO, n> peut être câblée dans le matériel, comme on l'a indiqué. Par exemple, dans un processeur classique, une instruction de configuration de l'unité MMU est scrutée par le matériel à chaque exécution pour vérifier que le programme en cours d'exécution tourne dans l'anneau associé au privilège superviseur, l'anneau courant étant identifié par un champ dédié du registre d'état de processeur PS. En d'autres termes, le champ dédié du registre PS est classiquement comparé à une valeur figée, et une faute de privilège est déclenchée lorsque la comparaison échoue. Dans un processeur du type décrit ici, le matériel est câblé pour comparer le champ dédié du registre PS, non à une valeur figée, mais au contenu programmable d'un champ dédié du registre MO, disons le champ à la position k. Alors, lorsque la comparaison échoue, le matériel déclenche la faute de privilège en produisant le tuple <MO, k>.

A la figure 5B, la routine de traitement d'exception exécute un retour d'exception RFE qui a pour objectif de redonner la main au programme interrompu. Le rang de l'anneau courant i, qui peut être lu dans le registre PS, sélectionne les registres de sauvegarde SPS_PL(i) et SPC_PL(i).

En même temps, les contenus des registres PS et SPS_PL(i) sont échangés et le compteur de programme PC reçoit le contenu du registre SPC_PL(i), ce qui rétablit le contexte du programme interrompu.

Au cycle d'horloge suivant, le programme interrompu reprend de là où il s'était arrêté.

Selon un mode de réalisation, les instructions d'écriture des registres REO sont conçues pour être utilisées avec un rang d'anneau relatif, à savoir un incrément entre 0 et +3 que l'unité BCU ajoute au rang de l'anneau courant pour obtenir les rangs absolus à écrire dans le registre REO. Cette fonctionnalité est illustrée à la figure 4 par une instruction d'écriture de registre « SET_REO » reçue par l'unité BCU, dont le rang relatif en paramètre est appliqué à un additionneur 10 qui reçoit par ailleurs le rang de l'anneau courant contenu dans un champ PL du registre d'état de processeur PS. La somme produit le rang absolu à écrire dans le registre REO visé.

Avec cette configuration, le micrologiciel du processeur peut démarrer la couche logicielle la plus privilégiée d'une pile logicielle donnée dans un anneau arbitraire, et permettre à cette première couche logicielle de programmer elle-même les anneaux des autres couches sans avoir à connaître l'anneau dans lequel elle se trouve. La pile logicielle peut alors être placée n'importe où dans la pile d'anneaux disponibles sans avoir besoin de recompiler les différentes couches.

Cette fonctionnalité peut être utile, par exemple, dans le cas où on propose une plateforme avec une couche de débogage bas-niveau (anneau 0) pour une pile logicielle donnée (exemple de la figure 1C), et que l'on souhaite ensuite passer la pile logicielle en production sur les anneaux les plus privilégiés (c'est-à-dire décaler les couches de la figure 1B d'un étage vers le bas).

Sur un processeur classique, en retirant la couche de débogage, on obtiendrait la configuration de la figure 1B, avec un « trou » à l'anneau 0. Cela permettrait de conserver les binaires des anneaux 2 et 3, mais l'hyperviseur dans l'anneau 1 devrait néanmoins être recompilé pour gérer les exceptions qui étaient gérées par le débogueur. Ensuite, décaler toute la pile vers le bas impliquerait la recompilation de toutes les couches.

Avec le mode de réalisation proposé, aucune recompilation n'est nécessaire. Dans le cas de la figure 1C, le micrologiciel est configuré pour démarrer le débogueur dans l'anneau 0. Le débogueur programme les exceptions qu'il gère (rang relatif +0) et démarre l'hyperviseur, qui, lui, peut programmer les exceptions qu'il gère ainsi que celles gérées par les couches supérieures, en utilisant les rangs relatifs +0 à +2, traduits par l'unité BCU en rangs absolus 1 à 3. Alternativement, l'hyperviseur peut déléguer au système d'exploitation la programmation des exceptions à gérer par le système d'exploitation et le programme applicatif - le système d'exploitation utiliserait les rangs relatifs +0 et +1, traduits par l'unité BCU en rangs absolus 2 et 3.

En enlevant la couche de débogage, le micrologiciel peut être configuré pour démarrer l'hyperviseur cette fois dans l'anneau 0. Celui-ci opère exactement de la même manière pour programmer l'attribution des exceptions avec des rangs relatifs +0 à +2, traduits cette fois par l'unité BCU en rangs absolus 0 à 2.

L'utilisation de rangs relatifs pour désigner les anneaux implique la mise en place d'un garde-fou pour traiter le cas d'un dépassement de borne. En effet, une pile logicielle pourrait par erreur être démarrée trop haut, de sorte que la dernière couche de la pile dépasse le dernier anneau.

Une telle situation peut être capturée par une faute matérielle dédiée de « dépassement d'anneau » déclenchée par l'unité BCU, et qui pourrait être traitée par un arrêt du système.

Cependant, une telle faute de dépassement pourrait être détournée pour simuler la présence d'anneaux supplémentaires. La faute est alors traitée par une routine qui met en place le nouvel anneau demandé, par exemple en sauvegardant les contenus des registres SFR associés à un anneau non-utilisé (probablement un anneau de bas niveau), en attribuant ces registres au nouvel anneau, et en les reprogrammant pour les faire correspondre aux privilèges du nouvel anneau. Ce mode d'exploitation permet d'envisager des piles logicielles comportant bien plus de 4 anneaux, et d'utiliser ceux mis en œuvre physiquement comme un cache.

La possibilité de reprogrammer les attributions des exceptions, ressources, et instructions aux anneaux ouvre de nombreuses autres perspectives dont on ne peut évoquer ici que quelques exemples.

Ainsi, il est courant qu'un processeur, comme celui de la figure 3, possède plusieurs moniteurs de performance PM, par exemple quatre. Dans une architecture classique, ils seraient par présomption affectés (de manière figée) à l'anneau du système d'exploitation, et les applications y accèderaient par des appels système, ce qui introduit de la latence. Selon la pile logicielle visée par le développeur, il pourrait être intéressant d'attribuer les moniteurs de performance différemment. Par exemple, une pile logicielle monocouche, comme un système temps-réel, a tout intérêt à être exécutée dans l'anneau 0, où elle pourrait accéder directement aux quatre moniteurs de performance. Dans une pile bicouche (système d'exploitation et code applicatif), il pourrait être intéressant de répartir les moniteurs de performance entre les deux anneaux correspondants, de sorte que le code applicatif ait un accès direct à un jeu de moniteurs qui lui est dédié.

Dans une pile logicielle avec hyperviseur, on pourrait souhaiter affecter un moniteur de performance à chacun des trois anneaux impliqués.

Le système décrit autorise tous ces scénarios en programmant en conséquence des champs correspondants du registre MO (exceptions diverses). Un accès à une ressource spécifique, comme un moniteur de performance, peut être effectué par l'intermédiaire d'un champ dédié d'un registre SFR, en exécutant une instruction gérée par l'unité BCU. Le registre MO peut alors attribuer un anneau donné au champ dédié du registre SFR. Ainsi, si l'anneau courant a les droits requis, l'instruction BCU est exécutée normalement, offrant un accès direct à la ressource. Dans le cas contraire, l'unité BCU déclenche une faute vers l'anneau spécifié dans le registre MO. Cela permet d'autoriser un accès direct à une ressource à un anneau donné programmé.

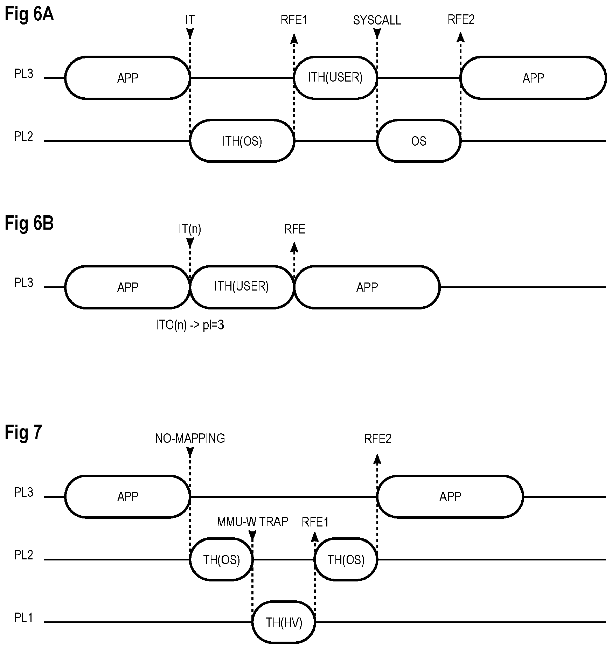

Les figures 6A et 6B illustrent un traitement d'une interruption dite « horizontale », respectivement dans un processeur classique et dans un processeur à attribution programmable des exceptions aux anneaux.

Une interruption « horizontale » est une interruption qui peut être traitée dans le même anneau que celui où le programme interrompu s'exécute. Il peut s'agir d'interruptions générées par des périphériques auxquels le code applicatif peut accéder directement sans risquer d'affecter l'intégrité du système. Un exemple de mise en œuvre d'interruptions horizontales est la gestion préemptive et asynchrone de données issues d'une queue de commande accessible à l'application.La figure 6A est un chronogramme illustrant le traitement d'une telle interruption de façon classique. Dans un processeur classique, une interruption est par construction toujours dirigée vers un anneau plus privilégié. Ainsi, lorsqu'un code applicatif APP tournant dans l'anneau 3 reçoit une interruption IT, l'exécution est déroutée vers l'anneau 2, par exemple le système d'exploitation OS, pour y être traitée par un gestionnaire d'interruptions ITH(OS) (« Interrupt Handler »).

Le gestionnaire d'interruptions ITH(OS) détermine la nature de l'interruption et exécute un retour d'exception RFE1 particulier, qui prépare le compteur de programme PC et le registre PS pour exécuter le gestionnaire d'interruptions ITH(USER) de l'anneau 3 (souvent un processus dédié cet effet) au lieu de provoquer la reprise du programme APP.

Un processus exécutant le gestionnaire d'interruptions ITH(USER) traite l'interruption et termine par un appel système SYSCALL vers le système d'exploitation pour que celui-ci rétablisse le contexte du programme APP, contexte qui avait été sauvegardé par le système d'exploitation à la survenue de l'interruption.

Finalement, le système d'exploitation rétablit le contexte en exécutant un retour d'exception RFE2 qui redonne la main au programme interrompu.

Selon les systèmes, la mise en œuvre d'une fonction « callback » utilisateur liée à une interruption peut différer, mais requiert généralement de multiples allers retours entre le monde utilisateur et le monde système d'exploitation.

La figure 6B illustre le même cas traité par un processeur à attribution programmable des exceptions aux anneaux. Ici, l'interruption horizontale considérée, identifiable par un numéro donné n, est attribuée par programmation du registre ITO au même anneau que celui du programme susceptible d'être interrompu, à savoir 3 dans le présent exemple.

Ainsi, lorsque l'interruption IT(n) survient, le système opère selon le mécanisme de la figure 5A pour exécuter le gestionnaire d'interruptions de l'anneau 3, et revient à l'exécution du programme interrompu selon le mécanisme de la figure 5B. Cela permet d'éviter des allers-retours entre anneaux « pour rien », avec pour bénéfice de diminuer significativement la latence.

La figure 7 illustre une autre application d'un processeur à attribution programmable des exceptions aux anneaux, permettant une utilisation relativement efficace de la mémoire dans une configuration virtualisée n'ayant pas de matériel dédié à la virtualisation.

Un système d'exploitation offre généralement à ses applications un espace d'adresses virtuelles qui sont traduites en adresses physiques à l'aide du gestionnaire de mémoire MMU (il faut noter ici que la notion d'adresse «virtuelle» est indépendante de la notion de machine « virtuelle » dans le cadre d'un système virtualisé). Le code applicatif a un accès direct à l'unité MMU pour les opérations courantes de lecture et écriture en mémoire, utilisant une table de traduction appelée « table des pages » qui est tenue à jour par le système d'exploitation. Les entrées les plus utilisées de la table des pages sont généralement mises en cache dans l'unité MMU, dans ce qu'on appelle la TLB (« Translation Lookaside Buffer »). Tant que les adresses virtuelles utilisées par le code applicatif ont une traduction dans la table des pages, le système d'exploitation n'intervient pas. Lorsqu'il manque une traduction dans la table des pages, une faute d'absence d'entrée (« no-mapping ») est déclenchée et dirigée vers le système d'exploitation pour mettre à jour la table des pages.

Lorsque le système d'exploitation est un système « invité » tournant dans une machine virtuelle gérée par un hyperviseur ou moniteur de machines virtuelles (« hôte »), la traduction d'adresses présente des difficultés. Les adresses physiques affectées aux adresses virtuelles sont des adresses physiques « invitées » ou intermédiaires qui n'ont pas de sens, car elles sont une illusion élaborée par l'hyperviseur pour le système d'exploitation invité. Elles sont à traduire plus loin vers des adresses physiques « hôtes » ou machine pour être exploitées. Il existe diverses extensions matérielles pour gérer ces traductions, comme le système SLAT (« Second Level Address Translation »), par rapport auxquelles la présente architecture de processeur n'offre pas d'avantages particuliers. De telles extensions matérielles sont cependant coûteuses en surface silicium.

Dans le cadre d'une gestion logicielle des traductions d'adresses, la présente architecture peut cependant offrir des optimisations.

L'hyperviseur est généralement configuré pour maintenir une table secondaire de traduction directe des adresses virtuelles en adresses physiques hôtes, souvent appelée « shadow table ». Cette fonctionnalité sera utilisée ci-après.

Le système est par ailleurs configuré pour que la machine virtuelle ait accès à l'unité MMU sans restriction apparente, mais que les instructions d'écriture de l'unité MMU soient attribuées, par programmation d'un champ dédié du registre MO, à l'anneau 1 (hyperviseur).

La figure 7 est un chronogramme illustrant un exemple de traitement d'une faute « no-mapping » survenant dans cette configuration.

Au cours de son exécution normale, un programme applicatif APP tournant sur la machine virtuelle, par exemple dans l'anneau 3, effectue des accès mémoire en utilisant l'unité MMU (ou TLB). Celle-ci traduit les adresses virtuelles utilisées par le programme applicatif directement en des adresses physiques hôtes grâce à une intervention furtive de l'hyperviseur sur la base de la table de traduction secondaire.

Les performances de la machine virtuelle sont alors équivalentes à celles d'une machine réelle.

Lorsque l'adresse virtuelle utilisée n'a pas de traduction, l'unité MMU déclenche une faute « no-mapping », qui est dirigée classiquement vers l'anneau 2, où tourne le système d'exploitation invité.

Le système d'exploitation réagit alors de façon classique pour tenter de mettre à jour l'unité MMU. Du fait de l'attribution à l'anneau 1 des instructions d'écriture de l'unité MMU, cette initiative provoque une faute de privilège vers l'anneau de l'hyperviseur. L'hyperviseur prend alors la main pour « corriger » la mise à jour que voulait faire le système d'exploitation. L'hyperviseur utilise pour cela la table secondaire et remplace les adresses physiques invitées proposées par le système d'exploitation par des adresses physiques hôtes, et cède la main au système d'exploitation invité en exécutant un retour d'exception RFE1. Le système d'exploitation invité « pense » avoir mis à jour l'unité MMU et cède la main au programme applicatif en exécutant un retour d'exception RFE2.

Cette structure présente aussi la particularité que la pile logicielle tournant dans la machine virtuelle peut tourner sans recompilation sur une machine réelle. En d'autres termes, si la machine virtuelle est seule dans le système, on peut supprimer la couche hyperviseur pour ne laisser que les couches des anneaux 2 et 3. Il suffit pour cela de réattribuer les instructions d'écriture de l'unité MMU à l'anneau 2.

## Revendications

1. Processeur ayant plusieurs anneaux de protection (PL) et comprenant un système de gestion d'anneaux de protection (BCU) dans lequel les attributions d'exceptions ou de ressources privilégiées à des anneaux de protection sont définies par une table programmable (REO).

2. Processeur selon la revendication 1, dans lequel la table est programmée par du logiciel exécuté au démarrage du processeur.

3. Processeur selon la revendication 1, dans lequel le système de gestion d'anneaux de protection est configuré pour répondre à une exception en déroutant le traitement de l'exception vers l'anneau programmé pour l'exception dans la table programmable.

4. Processeur selon la revendication 1, dans lequel le système de gestion d'anneaux de protection est configuré pour :
• déclencher une faute de privilège lors de l'accès à une ressource privilégiée à partir d'un anneau de protection moins privilégié que l'anneau programmé pour la ressource privilégiée dans la table programmable ; et
• répondre à la faute de privilège en déroutant le traitement de l'exception vers l'anneau programmé pour la ressource privilégiée dans la table programmable.

5. Processeur selon la revendication 1, comprenant :
• des unités matérielles (ITC, MMU) susceptibles de déclencher des exceptions à la survenue d'événements au cours de l'exécution d'un programme par le processeur ;
• un registre d'état de processeur (PS) identifiant l'anneau de protection courant appliqué au programme en cours d'exécution ;
• un registre d'attribution programmable (REO) matérialisant la table programmable ;
• pour chaque anneau de protection (PLi), un registre respectif de sauvegarde d'état de processeur (SPS_PLi), définissant l'anneau de protection et les droits correspondants ; et
• un circuit de traitement des exceptions (BCU), configuré pour, au déclenchement d'une exception :
- indexer le registre d'attribution avec un identifiant (n) généré avec l'exception, pour désigner l'anneau de protection correspondant (i) ;
- échanger le contenu du registre d'état de processeur (PS) avec le contenu du registre de sauvegarde d'état (SPS_PLi) désigné par le registre d'attribution ; et
- dérouter le programme en cours vers une routine de traitement de l'exception, d'où il résulte que la routine de traitement s'exécute dans l'anneau de protection défini par le nouveau contenu du registre d'état de processeur.

6. Processeur selon la revendication 5, comprenant :
• un compteur de programme (PC) identifiant l'adresse d'une instruction en cours d'exécution sur le processeur ;
• pour chaque anneau de protection (PLi), un registre respectif de sauvegarde du compteur de programme (SPC_Pli) ;
• pour chaque anneau de protection (PLi), un vecteur d'exception respectif (EV_PLi) identifiant les adresses des routines de traitement des exceptions de l'anneau de protection correspondant ;
le circuit de traitement des exceptions (BCU) étant en outre configuré pour, au déclenchement d'une exception :
• enregistrer le contenu du compteur de programme (PC) dans le registre de sauvegarde de compteur de programme désigné par le registre d'attribution ; et
• écrire dans le compteur de programme l'adresse fournie par le vecteur d'exception désigné par le registre d'attribution.

7. Processeur selon la revendication 5, comprenant une instruction d'écriture de registre système, mise en œuvre par le processeur pour écrire dans le registre d'attribution, identifié par l'instruction, la somme du rang de l'anneau courant et d'un paramètre de l'instruction véhiculant un rang relatif.

8. Processeur selon la revendication 5, dans lequel les exceptions incluent une interruption dite horizontale, le registre d'attribution étant programmé pour affecter l'interruption horizontale au même anneau de protection que celui du programme en cours d'exécution au moment du déclenchement de l'interruption.

9. Procédé de gestion d'anneaux de protection (PL) dans un processeur, comprenant les étapes suivantes :
• programmer une table (REO) d'attribution d'exceptions ou de ressources privilégiées à des anneaux de protection ;
• au déclenchement par le processeur d'un événement signalant une exception quelconque ou un accès à une ressource privilégiée dans un anneau moins privilégié que celui programmé pour la ressource privilégiée, traiter l'événement par une routine s'exécutant dans un anneau de protection affecté à l'exception ou à la ressource privilégiée ; et
• trouver dans la table l'anneau de protection affecté à l'exception ou à la ressource privilégiée.

10. Procédé selon la revendication 9, comprenant une étape de programmation de la table d'attribution par du logiciel exécuté au démarrage du processeur.

11. Procédé selon la revendication 9, comprenant les étapes suivantes :
• exécuter un programme en cours dans un anneau de protection et selon des droits définis dans un registre d'état de processeur (PS) ;
• pour chaque anneau de protection (PLi), définir, dans un registre respectif de sauvegarde d'état de processeur (SPS_PLi), l'anneau de protection et des droits correspondants ; et
• au déclenchement de l'événement, échanger le contenu du registre d'état de processeur (PS) avec le contenu du registre de sauvegarde d'état (SPS_PLi) identifié par la table d'attribution.

12. Procédé selon la revendication 9, comprenant les étapes suivantes :
• exécuter un hyperviseur hôte dans un premier anneau (PL0) ;
• exécuter un système d'exploitation invité dans un deuxième anneau (PL1) moins privilégié que le premier anneau, conçu à l'origine pour gérer une table de traduction d'adresses virtuelles en adresses physiques (MMU) ;
• exécuter un programme utilisateur dans un troisième anneau (PL2) moins privilégié que le deuxième anneau, conçu pour utiliser des adresses virtuelles appliquées à la table de traduction ;
• dans la table d'attribution, attribuer au deuxième anneau une exception de défaut d'allocation d'adresse virtuelle, déclenchée lorsque la table de traduction ne contient pas d'entrée pour une adresse virtuelle appliquée par le programme utilisateur ;
• dans la table d'attribution, attribuer la table de traduction en tant que ressource privilégiée au premier anneau, d'où il résulte qu'une tentative d'accès en écriture à la table de traduction par un anneau moins privilégié déclenche une faute de privilège ; et
• configurer la routine de traitement de la faute de privilège, exécutée dans le premier anneau par l'hyperviseur, pour mettre à jour la table de traduction.
